# FASCICULE DE BREVET EUROPEEN

(11) **EP 3 600 931 B1**
(45) Date de publication et mention de la délivrance du brevet: **13.01.2021**
(21) Numéro de dépôt: 18722101.5
(22) Date de dépôt: 29.03.2018
(51) Int. Cl.: B60J 10/32, B60J 10/40, B60J 10/70

(54) **VITRAGE COMPRENANT UN CORDON PROFILE DE CLIPAGE POUR UNE PIECE DE COUVERTURE CLIPABLE**
VERGLASUNG MIT EINEM PROFILIERTEN AUFKLEMMWULST FÜR EIN AUFKLEMMABDECKTEIL
GLAZING COMPRISING A CLIP-ON PROFILED BEAD FOR A CLIP-ON COVER PART

(30) Priorité: 30.03.2017 FR 1752692
(43) Date de publication de la demande: 05.02.2020
(73) Titulaire: SAINT-GOBAIN GLASS FRANCE, 92400 Courbevoie (FR)
(72) Inventeur: DE PAOLI, Martial, 60400 Cuts (FR); LAMOUREUX, Laurent, 60170 Ribecourt-Dreslincourt (FR)
(74) Mandataire: Saint-Gobain Recherche
(86) Numéro de dépôt international: PCT/FR2018/050763
(87) Numéro de publication internationale: WO 2018/178573

(56) Documents cités:
- WO-A1-2006/064153
- WO-A1-2013/120671
- WO-A1-2013/127977
- WO-A1-2016/124868
- US-A1- 2014 332 519

## Description

La présente invention concerne un vitrage, et notamment un vitrage de véhicule, comprenant un vitre, et par exemple une vitre feuilletée comprenant une feuille de verre extérieure, une feuille de verre intérieure et une feuille intercalaire de matière plastique située entre lesdites deux feuilles de verre.

Le vitrage selon l'invention comporte le long d'au moins une partie d'au moins un bord de la vitre un cordon profilé comportant une rainure pour le clipage d'une pièce de couverture sur ledit cordon profilé, ladite pièce de couverture comportant, vue en coupe transversale, un harpon pénétrant dans ladite rainure lors du clipage.

Il est connu en effet pour assurer le positionnement et/ou la fixation d'une pièce de couverture sur un élément vitré, d'utiliser un tel cordon profilé comportant une rainure.

Ce cordon profilé est généralement fixé à la face intérieure de la vitre à l'aide d'une aile intérieure qui est collée contre cette face intérieure et/ou à l'aide d'une aile intercalaire située entre la feuille de verre extérieure et le feuille de verre intérieure lorsque la vitre est feuilletée.

Pour une bonne adhésion de cette aile intérieure à la vitre qui autorise un clipage en force dans la rainure, cette aile intérieure doit être relativement large (lorsque le cordon profilé est observé en coupe transversale, comme c'est le cas dans la majorité des documents de l'art antérieur) .

L'art antérieur connaît deux types de situations :
- lorsque la pièce de couverture vient couvrir au moins la rainure en dépassant au-dessus de la face extérieure de la vitre, comme par exemple dans les demandes de brevets EP 945 296, DE 3606566 ; et
- lorsque la pièce de couverture vient couvrir au moins la rainure sans dépasser au-dessus de la face extérieure de la vitre, comme par exemple dans les demandes de brevets WO 2001/045974 ou WO 2001/85481.

Dans la solution de la demande WO 2001/85481 en particulier, le cordon profilé comporte un revêtement extérieur souple qui réalise la jonction affleurante entre la vitre à laquelle le cordon profilé est attaché et une pièce de couverture qui est clippée sur le cordon profilé. Toutefois, il est parfois difficile de réaliser cette jonction affleurante avec un aspect esthétique identique tout le long d'un bord du vitrage ; il est impossible de réaliser cette jonction avec un aspect esthétique identique en continu le long de plusieurs bords du vitrage.

Cette jonction n'est pas appropriée lorsque deux vitres sont adjacentes.

Plus récemment, il a été proposé dans la demande internationale de brevet N° WO 2016/124868 un vitrage comportant un cordon profilé qui permet en clipage en force, et donc qui est solidement attaché à la vitre lorsqu'elle est feuilletée, tout en permettant d'augmenter le clair de vue à travers la vitre, grâce à une aile intercalaire du cordon profilé qui est située entre ladite face intercalaire de ladite feuille de verre extérieure et ladite face intercalaire de ladite feuille de verre intérieure.

Toutefois, cette solution ne permet pas de réaliser une jonction affleurante entre la vitre à laquelle le cordon profilé est attaché et une pièce de couverture qui est clippée sur le cordon profilé.

Par ailleurs, l'art antérieur connaît des solutions de juxtaposition de vitres, et notamment pour des véhicules, pour lesquelles une première vitre et une seconde vitre juxtaposée à la première sont assemblées côte à côte grâce à un système d'assemblage, et notamment les demandes internationales de brevet : WO 2006/064153, WO 2010/006257 et WO 2013/120671.

Toutefois, il est difficile de réaliser une jonction affleurante avec un aspect esthétique identique tout le long d'un bord longitudinal des deux vitres ; il est impossible de réaliser cette jonction affleurante avec un aspect esthétique identique en continu le long de plusieurs bords des deux vitres.

La présente invention a pour but de remédier à des inconvénients de l'art antérieur en proposant une solution de joint à rainure pour le clipage d'une pièce de couverture bord à bord :
- entre deux vitres,
- et cela que les vitres soient chacune monolithique ou feuilletée, afin de permettre de réaliser une double jonction affleurante.

Cette pièce de couverture réalise ainsi, vue en coupe transversale selon un bord du vitrage, la liaison affleurante entre un de ses bords et le bord d'une vitre, ainsi que la liaison affleurante entre un autre de ses bords et le bord d'une autre vitre adjacente, de telle sorte que toutes ces liaisons de bords soient des liaisons affleurantes.

Ce double affleurement participe activement à l'étanchéité des liaisons et peut permettre :
- d'améliorer le coefficient aérodynamique en participant à la réduction du coefficient de pénétration dans l'air, et/ou
- de réduire les bruits aérodynamiques des liaisons, et/ou
- de diminuer la pénétration de poussières ou de fluides plus à l'intérieur que la face extérieur de la vitre ou des vitres, et/ou
- de compenser de faibles jeux ou de faibles dispersions de fabrication d'une vitre à l'autre pour un même modèle de vitre, et/ou
- de créer une double liaison esthétique discrète lorsque le revêtement extérieur est choisi dans une couleur sombre, proche de la couleur des bords de la vitre, ou au contraire une double liaison qui attire l'œil lorsque le revêtement extérieur est choisi avec un aspect clair ou métallique (par exemple un aspect chromé).

La présente invention se rapporte ainsi à un vitrage, et notamment un vitrage de véhicule, selon la revendication 1. Les revendications dépendantes présentent des caractéristiques avantageuses.

Ce vitrage comprend une vitre, et notamment une vitre feuilletée comprenant alors une feuille de verre extérieure, une feuille de verre intérieure et une feuille intercalaire de matière plastique située entre lesdites deux feuilles de verre, ladite vitre, feuilletée ou non, présentant une face extérieure, un chant et une face intérieure, ledit vitrage comportant en outre une vitre adjacente, notamment une vitre adjacente feuilletée comprenant une feuille de verre extérieure ainsi qu'une feuille de verre intérieure et une feuille intercalaire de matière plastique située entre lesdites deux feuilles de verre, ladite vitre adjacente présentant une face extérieure, un chant et une face intérieure.

Ce vitrage est remarquable en ce que ladite vitre comporte le long d'au moins une partie d'au moins un bord longitudinal un cordon profilé comportant une rainure pour le clippage d'une pièce de couverture sur ledit cordon profilé, ladite pièce de couverture comportant, vue en coupe transversale, un harpon pénétrant dans ladite rainure lors du clippage.

Ainsi, lorsque ledit harpon est situé dans ladite rainure, ladite pièce de couverture comporte en outre :
- d'une part, plus à l'extérieur que ledit harpon et en dehors de ladite rainure : une base ; cette base étant située en vis-à-vis à la fois d'au moins une partie dudit chant de ladite vitre qui porte le cordon profilé et d'au moins une partie dudit chant de ladite vitre adjacente ; cette base est située en vis-à-vis d'une partie seulement dudit chant de la vitre qui porte le cordon profilé selon l'épaisseur de cette vitre (c'est-à-dire la hauteur dudit chant) et elle est située en vis-à-vis d'une partie ou de la totalité dudit chant de la vitre qui porte le cordon profilé selon la longueur dudit chant ;
- et d'autre part, plus à l'extérieur que ladite base : un revêtement extérieur, souple ; ce revêtement extérieur étant situé en vis-à-vis à la fois d'au moins une partie dudit chant de ladite vitre qui porte le cordon profilé et d'au moins une partie dudit chant de ladite vitre adjacente et présentant une dureté Shore A comprise entre 45 et 90, voire entre 55 et 85 ; ce revêtement extérieur est situé en vis-à-vis d'une partie seulement dudit chant de la vitre qui porte le cordon profilé selon l'épaisseur de cette vitre (c'est-à-dire la hauteur dudit chant) car la base qui est située dessous, vers l'intérieur, est aussi en vis-à-vis de ce chant ; il est situé en vis-à-vis d'une partie ou de la totalité dudit chant de la vitre qui porte le cordon profilé selon la longueur dudit chant.

Ledit harpon, ladite base et ledit revêtement extérieur appartiennent à ladite pièce de couverture et font chacun partie intégrante de cette pièce de couverture ; il n'est pas possible de séparer un élément de cet ensemble en conservant l'intégrité de la pièce de couverture.

Comme le matériau du revêtement extérieur est de préférence différent de celui du harpon, la pièce de couverture peut alors est fabriquée par co-extrusion de plusieurs matières. Le fait que la pièce de couverture soit constituée de plusieurs matériaux complique alors sa fabrication mais les avantages procurés par la souplesse du revêtement extérieur sont importants.

Ce revêtement extérieur est de préférence au contact du chant de la vitre qui porte le cordon profilé afin que ce contact participe à diminuer la pénétration de poussière ou de fluide plus à l'intérieur et confère une apparence esthétique de continuité.

D'une manière surprenante, il a ainsi été découvert qu'il était possible de réaliser une pièce de couverture à harpon et à revêtement extérieur souple pour réaliser une double liaison affleurante entre une première vitre et une seconde vitre adjacente, voire en outre entre ladite vitre qui porte le cordon profilé et une feuillure de carrosserie adjacente. Ce matériau du revêtement extérieur est souple et cette souplesse est exprimée ici par une référence à une dureté relativement faible, exprimée en Shore A.

Ainsi, il est possible que ledit cordon profilé s'étende le long d'au moins deux bords (par exemple un bord transversal et un bord longitudinal, voire deux bords longitudinaux) de ladite vitre, afin de permettre en outre de réaliser une double liaison affleurante entre ladite vitre qui porte le cordon profilé et une, voire deux, feuillure(s) de carrosserie adjacente(s) à cette vitre.

Cette solution à revêtement extérieur souple est plus simple à fabriquer que les solutions de l'art antérieur qui prévoient que c'est le cordon profilé lui-même qui comporte un revêtement extérieur souple pour la jonction entre une pièce de couverture et la vitre qui porte le cordon profilé.

Elle permet en outre de réaliser une pièce de couverture avec un revêtement extérieur qui s'étend d'un seul tenant le long de plusieurs bords d'une vitre qui porte le cordon profilé, voire le long de la totalité de la périphérie d'une vitre, et cela, que la vitre comportant le cordon profilé soit, dans le véhicule :
- entourée partiellement d'une feuillure de carrosserie avec une autre vitre adjacente le long d'une partie au moins (ou la totalité) d'un de ses bords
- voire en outre entourée d'une feuillure de carrosserie le long des autres bords.

Comme le harpon est la partie de la pièce de couverture qui pénètre dans la rainure du cordon profilé pour réaliser le clipage, le harpon n'est pas en contact avec le chant de la vitre qui porte le cordon profilé.

Le harpon peut être présent tout le long de ladite pièce de couverture ou peut être prévu en plusieurs endroits le long de ladite pièce de couverture.

De préférence, au moins ledit harpon, voire ledit harpon et ladite base, présente (ou présentent tous les deux) une dureté supérieure à celle du revêtement extérieur ; cela était déjà nécessaire dans l'art antérieur et est toujours nécessaire car c'est directement lié à la fonction du harpon : pour être correctement maintenu par la rainure, le harpon doit être suffisamment dur.

Il est possible que la base et le revêtement extérieur soient confondus et soient constitués du même matériau ; toutefois, le revêtement extérieur est nécessairement dans un matériau différent et plus souple que celui du harpon, avec une dureté qui n'est pas sur la même échelle (Shore A pour le revêtement extérieur et Shore D pour le harpon).

Lorsque la base et le revêtement extérieur sont constitués de matériaux différent, la base est située à distance d'au moins une partie dudit chant de la vitre qui porte le cordon profilé, c'est-à-dire qu'elle n'est pas en contact avec ce chant ; Lorsque la base et le revêtement extérieur sont constitués du même matériau, la base peut être en contact avec le chant de la vitre qui porte le cordon profilé.

De préférence, ledit cordon profilé présente une dureté Shore D comprise entre 1 et 100, voire entre 5 et 95.

De préférence, ledit harpon présente une dureté Shore D comprise entre 1 et 100, voire entre 5 et 95.

De préférence, ladite base présente une dureté Shore D comprise entre 1 et 100, voire entre 5 et 95.

Ladite rainure du cordon profilé s'ouvre de préférence vers l'extérieur et ladite base ainsi que ledit revêtement extérieur sont destinés à être positionnés plus à l'extérieur que ladite rainure du cordon profilé.

Ledit vitrage qui comporte le cordon profilé est un vitrage fixe, destiné à être collé dans une baie afin de fermer cette baie.

Ledit revêtement extérieur présente, de préférence, une face extérieure qui est située dans la continuité de ladite face extérieure de ladite vitre.

C'est le revêtement extérieur qui à la fois confère l'aspect esthétique, vu de l'extérieur, de la pièce de couverture en étant de préférence dans la continuité de la surface de la vitre, et à la fois réalise une certaine étanchéité pour empêcher de l'eau ou des poussières de pénétrer entre la vitre et la pièce de couverture en étant de préférence au contact du chant de la vitre qui porte le cordon profilé ; cette étanchéité n'est pas absolue car c'est le cordon de colle qui réalise le plus haut niveau d'étanchéité entre l'extérieur et l'intérieur.

Ladite base présente, de préférence, une largeur comprise entre 2,0 et 20,0 mm, voire comprise entre 3,0 et 15,0 mm, voire comprise entre 4,0 et 10,0 mm afin d'être suffisamment solide tout en étant relativement compacte.

Ledit revêtement extérieur présente, de préférence, une largeur comprise entre 1,05 et 1,5 fois la largeur de ladite base afin que ladite base ne soit pas en contact avec le chant de ladite vitre et pour assurer ainsi que c'est bien ledit revêtement extérieur qui est en contact avec le chant de la vitre.

Selon l'invention, le vitrage comporte, outre de la première vitre, une seconde vitre adjacente, notamment une vitre adjacente feuilletée comprenant alors une feuille de verre extérieure ainsi qu'une feuille de verre intérieure et une feuille intercalaire de matière plastique située entre lesdites deux feuilles de verre, ladite vitre adjacente présentant une face extérieure, un chant et une face intérieure, ladite base de ladite pièce de couverture étant située en vis-à-vis d'au moins une partie dudit chant de la vitre adjacente et ledit revêtement extérieur étant situé en vis-à-vis d'au moins une partie dudit chant de la vitre adjacente. Ainsi :
- d'une part, la base de la pièce de couverture est située en vis-à-vis d'une partie seulement dudit chant de la vitre adjacente selon l'épaisseur de cette vitre adjacente (c'est-à-dire la hauteur de son chant) et elle est située en vis-à-vis d'une partie ou de la totalité dudit chant de la vitre adjacente selon la longueur de ce chant ;
- et d'autre part, le revêtement extérieur est situé en vis-à-vis d'une partie seulement dudit chant de la vitre adjacente selon l'épaisseur de cette vitre adjacente (c'est-à-dire la hauteur de ce chant) car la base qui est située dessous, vers l'intérieur, est aussi en vis-à-vis de ce chant adjacent ; il est situé en vis-à-vis d'une partie ou de la totalité dudit chant de la vitre adjacente selon la longueur de ce chant.

Lorsque la base et le revêtement extérieur sont constitués de matériaux différents, la base est située à distance d'au moins une partie dudit chant de la vitre adjacente, c'est-à-dire qu'elle n'est pas en contact avec ce chant ; Lorsque la base et le revêtement extérieur sont constitués du même matériau, la base peut être en contact avec le chant de la vitre adjacente.

Dans l'invention, de préférence, ladite face extérieure de ladite vitre adjacente est située dans la continuité de ladite face extérieure de ladite vitre.

Dans cette variante, par ailleurs de préférence, le chant de ladite vitre adjacente est nu, sans cordon de matière plastique, et de préférence en outre la face extérieure de ladite vitre adjacente est aussi nue, sans cordon de matière plastique au contact de la face extérieure de ladite vitre adjacente.

Dans l'invention, en outre de préférence, ledit cordon profilé est séparé, sans contact, du chant de ladite vitre adjacente.

Quelle que soit la variante, ledit cordon profilé est situé, de préférence, le long d'un bord avant et/ou le long d'un bord arrière de ladite vitre positionnée à plat.

Lorsque le vitrage est un vitrage de toit, ledit cordon profilé est situé, de préférence, le long d'un seul bord avant ; c'est le bord le plus important pour la gestion de l'aérodynamique et du bruit.

Dans une variante toute particulière de l'invention ledit cordon profilé est périphérique, situé tout le long d'un pourtour de ladite vitre.

Pour sa fixation efficace et compacte à une vitre feuilletée, ledit cordon profilé comporte, de préférence, vu en coupe transversale, une aile intercalaire et la vitre est feuilletée, ladite aile intercalaire étant située entre une face intercalaire de ladite feuille de verre extérieure et une face intercalaire de ladite feuille de verre intérieure.

Par l'expression « une aile intercalaire située entre une face intercalaire de ladite feuille de verre extérieure et une face intercalaire de ladite feuille de verre intérieure », il faut comprendre que l'aile intercalaire s'étend selon sa largeur transversale entre une face intercalaire de ladite feuille de verre extérieure qui est la face de la feuille de verre extérieure située vers la feuille intercalaire et une face intercalaire de ladite feuille de verre intérieure qui est la face de la feuille de verre intérieure située vers la feuille intercalaire.

Ladite aile intercalaire est au contact direct ou indirect (et dans ce cas par l'intermédiaire d'une matière adhésive) de ladite face intercalaire de ladite feuille de verre extérieure et elle est au contact direct ou indirect (et dans ce cas par l'intermédiaire d'une matière adhésive) de ladite face intercalaire de ladite feuille de verre intérieure.

Ladite aile intercalaire présente alors, de préférence, une épaisseur :
- égale à l'épaisseur entre ladite feuille de verre extérieure et ladite feuille de verre intérieure et en particulier égale à l'épaisseur de ladite feuille intercalaire de matière plastique et notamment égale à 0,76 mm, ou
- inférieure à l'épaisseur entre ladite feuille de verre extérieure et ladite feuille de verre intérieure.

De préférence, ladite aile intercalaire est maintenue entre la face intercalaire de la feuille de verre extérieure et la face intercalaire de la feuille de verre intérieure par maintien mécanique, par exemple en étant comprimée entre ces deux faces et/ou par maintien chimique, par exemple en étant collée à ces deux faces. Bien que cela ne soit pas illustré, il est possible par ailleurs que l'aile intercalaire soit noyée (maintien mécanique et chimique) dans la feuille intercalaire de matière plastique, avec de la matière de cette feuille intercalaire de matière plastique d'une part entre l'aile intercalaire et la face intercalaire de la feuille de verre extérieure et/ou d'autre part entre l'aile intercalaire et la face intercalaire de la feuille de verre intérieure.

Dans une variante indépendante des autres et cumulable avec les autres, vue en coupe transversale, ladite face extérieure de ladite vitre est libre en vis-à-vis de ladite rainure et ladite face intérieure de ladite vitre est libre en vis-à-vis de ladite rainure.

Ainsi, lorsque la vitre est une vitre feuilletée, vu en coupe transversale, ladite face extérieure de ladite feuille de verre extérieure est libre en vis-à-vis de ladite rainure et ladite face intérieure de ladite feuille de verre intérieure est libre en vis-à-vis de ladite rainure.

De préférence, ladite rainure est située en vis-à-vis du chant de ladite vitre qui porte le cordon profilé et ne s'étend pas au-dessus de ladite face extérieure de cette vitre.

Ladite rainure du cordon profilé est, de préférence, située en vis-à-vis d'une partie dudit chant de la vitre qui porte le cordon profilé afin que le système de clipage soit compact ; cette rainure est située en vis-à-vis d'une partie seulement dudit chant de la vitre selon l'épaisseur de cette vitre (c'est-à-dire la hauteur dudit chant) et elle est située en vis-à-vis d'une partie ou de la totalité dudit chant de la vitre selon la longueur dudit chant.

De préférence, lorsque la vitre qui porte le cordon profilé est une vitre feuilletée, ladite rainure est située en vis-à-vis du chant de ladite feuille de verre intérieure, voire en outre en vis-à-vis du chant de la feuille intercalaire de matière plastique mais n'est pas située en vis-à-vis du chant de ladite feuille de verre extérieure. C'est une solution particulièrement compacte.

De préférence, lorsque la vitre adjacente est une vitre feuilletée, ladite rainure est située en vis-à-vis du chant de ladite feuille de verre intérieure de la vitre adjacente, voire en vis-à-vis du chant de la feuille intercalaire de matière plastique de la vitre adjacente mais n'est pas située en vis-à-vis du chant de ladite feuille de verre extérieure de la vitre adjacente. C'est une solution particulièrement compacte.

Pour sa fixation efficace à la vitre qui le porte, ledit cordon profilé peut comporter, vu en coupe transversale, une aile intérieure située en dessous de ladite face intérieure de cette vitre.

Pour améliorer encore l'étanchéité à l'eau et aux poussières et réduire la propagation des bruits aérodynamiques extérieurs, ladite base peut comporter, vue en coupe transversale, au moins une, et de préférence deux, lèvre(s) intérieure(s) orientée(s) respectivement vers un avaloir centrifuge de ladite rainure et/ou vers un avaloir centripète de ladite rainure, ladite ou chaque lèvre intérieure étant de préférence en un matériau différent de celui de ladite base et de préférence encore un matériau identique à celui dudit revêtement extérieur.

Pour améliorer l'étanchéité à l'eau et aux poussières et réduire la propagation des bruits aérodynamiques extérieurs, ledit revêtement extérieur peut être au contact d'au moins une partie dudit chant de la vitre, voire en outre au contact d'au moins une partie dudit chant de la vitre adjacente ; ce(s) contact(s) sont, de préférence sans adhésion.

Ce contact est contre une partie seulement dudit chant de la vitre (voire de la vitre adjacente) selon l'épaisseur de cette vitre (voire de la vitre adjacente) car la base qui est située dessous, vers l'intérieur, est aussi en vis-à-vis du chant de cette vitre (voire de la vitre adjacente) ; ce contact est contre une partie ou la totalité dudit chant de la vitre (voire de la vitre adjacente) selon la longueur de ce chant.

Toutefois, à la place de ce(s) contact(s), il peut être prévu que ladite base comporte, vue en coupe transversale, au moins une, et de préférence deux, lèvre(s) extérieure(s) orientée(s) respectivement vers ledit chant de la vitre (2) avec un contact et/ou vers ledit chant de ladite vitre adjacente avec un contact.

Ce contact aussi est contre une partie seulement dudit chant de la vitre qui porte le cordon profilé (voire en outre de la vitre adjacente) selon l'épaisseur de cette vitre (voire de la vitre adjacente) car la base qui est située dessous, vers l'intérieur, est aussi en vis-à-vis du chant de cette vitre (voire de la vitre adjacente) ; ce contact est contre une partie ou la totalité dudit chant de la vitre (voire de la vitre adjacente) selon la longueur de ce chant.

Lorsqu'un cordon profilé comporte, vu en coupe transversale, une aile intercalaire alors la vitre à laquelle il est fixé est nécessairement feuilletée ; Lorsqu'un cordon profilé comporte, vu en coupe transversale, une aile intérieure alors la vitre à laquelle il est fixé n'est pas nécessairement feuilletée ; elle peut être monolithique ou feuilletée.

Dans une variante indépendante des autres et cumulable avec les autres, ladite rainure comporte, vue en coupe transversale, deux bossages longitudinaux située en vis-à-vis l'un de l'autre et sous respectivement un avaloir centrifuge de ladite rainure et un avaloir centripète de ladite rainure.

De préférence, pour améliorer la fiabilité du positionnement de la pièce de couverture par rapport au cordon profilé et ainsi par rapport à la vitre qui porte ce cordon profilé ledit harpon comporte, vu en coupe transversale, une extrémité intérieure plate, qui vient se loger entre lesdits bossages longitudinaux de ladite rainure.

De préférence, ladite base est à distance au-dessus de ladite rainure, c'est-à-dire que ladite base n'est pas au contact de ladite rainure. Ainsi, la base ne risque pas d'influencer défavorablement le clipage du harpon dans cette rainure et ce clipage est plus fiable dans le temps.

Dans une variante indépendante des autres et cumulable avec les autres, ladite pièce de couverture comporte, vue en coupe transversale, un plan de symétrie afin que pièce de couverture n'ait pas sens de pose et pour éviter ainsi les erreurs de pose.

Ladite rainure comporte aussi, de préférence un plan de symétrie qui est confondu avec celui de ladite pièce de couverture afin de faciliter la pose.

Toutefois, il est possible que ladite pièce de couverture présente, vue en coupe transversale, une forme non symétrique, avec un revêtement extérieur qui s'étend latéralement plus vers une feuillure ou une vitre adjacente que vers ladite vitre qui porte le cordon profilé, lorsque ledit harpon est pris pour référence.

Avantageusement, la présente invention permet de proposer un vitrage à cordon profilé de clipage qui est fiable, compact et simple à mettre en œuvre.

Il est ainsi possible de réaliser un vitrage comportant deux vitres, une qui porte un cordon profilé à rainure et une autre, adjacente, qui ne porte pas de cordon profilé à rainure, de telle sorte que la face extérieure des deux vitres soient dans la continuité l'une de l'autre, cette continuité étant réalisée par le revêtement extérieur entre les chants des vitres.

Dans ce cas, les deux vitres contiguës ne sont pas fixées (dans le sens directement attachées ou collées) l'une à l'autre : elles sont chacune fixées (collées) à un élément unique (c'est-à-dire au même élément) de la baie qu'elles ferment ensemble, c'est-à-dire à un élément de carrosserie (comme par exemple une feuillure) dans le cas de l'application du vitrage comme vitrage de véhicule.

Dans le présent document, lorsque des plages de valeurs sont indiquées, les bornes sont incluses dans les plages.

On décrira ci-après, à titre d'exemple non limitatif, plusieurs formes d'exécution de l'assemblage d'une pièce de couverture sur une vitre grâce à un cordon profilé, en référence aux figures annexées :
- la figure 1 est une vue en coupe d'un premier mode de réalisation de l'assemblage, non conforme à l'invention, à proximité d'une feuillure de carrosserie, d'une pièce de couverture sur un cordon profilé à rainure latérale et aile intérieure ;
- la figure 2 est une vue en coupe d'une variante du mode de la figure 1 dans laquelle le cordon profilé est à aile intercalaire ;
- la figure 3 est une vue en coupe d'un second mode de réalisation de l'assemblage, selon l'invention, entre deux vitres d'une pièce de couverture sur un cordon profilé à rainure latérale et aile intérieure ;
- la figure 4 est une vue en coupe d'une variante du mode de la figure 3 dans laquelle le cordon profilé est à aile intercalaire ;
- la figure 5 est une vue en coupe d'une variante du mode de la figure 3 dans laquelle le cordon profilé est à rainure latérale en sillon et à aile intérieure et dans laquelle la pièce de couverture est à lèvres intérieures ;
- la figure 6 est une vue en coupe d'une variante du mode de la figure 5 dans laquelle le cordon profilé est à aile intercalaire ; et
- la figure 7 est une vue en coupe d'une variante du mode de la figure 5 dans laquelle la pièce de couverture est à lèvres intérieures et à lèvres extérieures.

A l'intérieur de chaque figure, les proportions entre les différents éléments sont respectées et les éléments en arrière plan ne sont en général pas représentés, afin de faciliter leur lecture. Les mêmes références désignent les mêmes éléments d'une figure à l'autre.

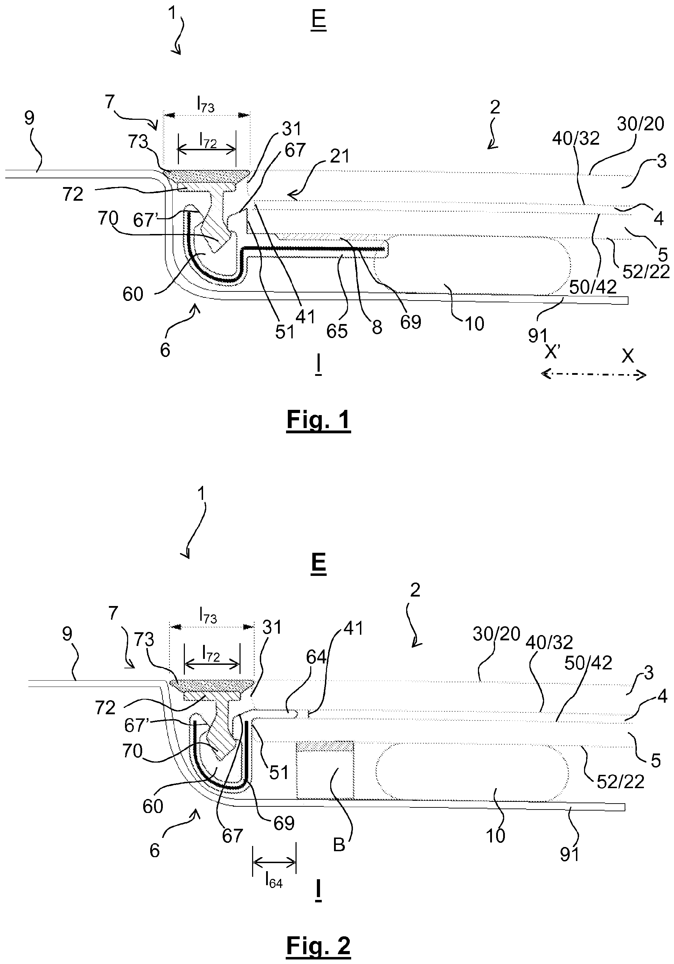

La présente invention se rapporte à un vitrage 1, tel que visible en partie sur les figures 1 à 7, comprenant au moins une vitre 2 monolithique ou feuilletée.

La présente invention est décrite à titre d'exemple dans le cadre d'une application comme vitrage de véhicule, ce vitrage réalisant une séparation entre un espace extérieur E qui est extérieur au véhicule et un espace intérieur I qui est intérieur au véhicule. Les notions de « extérieur » et « intérieur » sont donc considérée par rapport respectivement à cet espace extérieur E et cet espace intérieur I.

La vitre 2 présente ainsi une face extérieure 20 orientée vers l'espace extérieur E, une face intérieure 22 vers l'espace intérieur I et un chant 21 périphérique, situé entre ces deux faces.

La présente invention est décrite en particulier en étant appliquée à un vitrage de toit de véhicule, fixe, et les figures sont ainsi des vues en coupe selon la verticale du vitrage 1 installé, collé, dans une baie de carrosserie.

Pour les variantes des figures 1 à 2, il s'agit d'une application à un vitrage de toit de véhicule comportant une seule vitre.

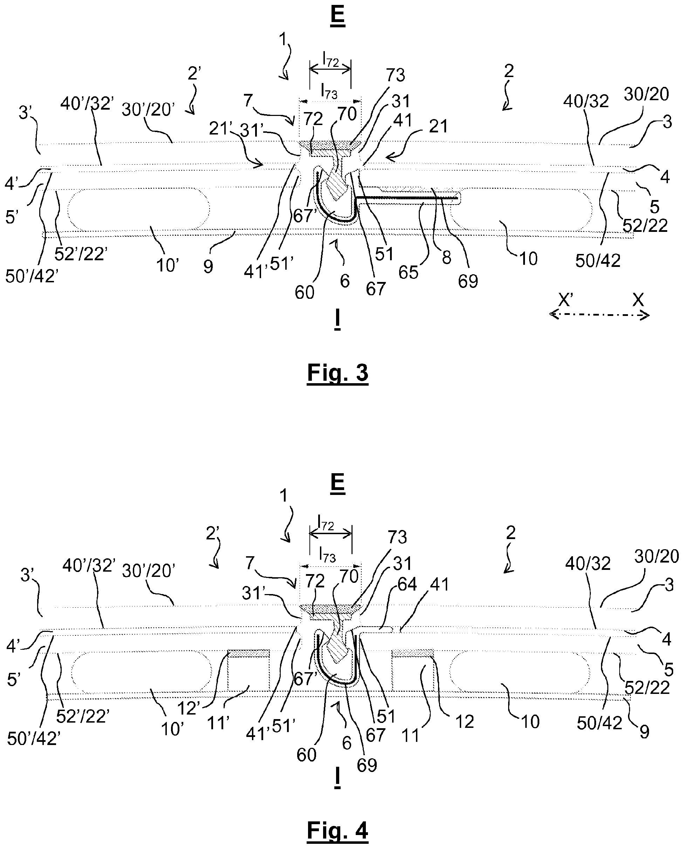

Pour les variantes des figures 3 à 7, il s'agit d'une application à un vitrage de toit de véhicule comportant deux vitres côte à côte ou plus précisément encore l'une devant l'autre lorsque le sens d'avancé du véhicule est considéré.

Dans le cadre du présent document, la notion de « centripète » et celle de « centrifuge » est à considérer par rapport à l'axe longitudinal central d'avancé du véhicule équipé du vitrage selon l'invention en tant que vitrage de toit, c'est-à-dire l'axe généralement appelé l'axe X-X' du véhicule, tel qu'on peut le voir uniquement en figures 1 et 3 mais c'est la même orientation pour les autres figures ; le sens centripète est le sens X de cet axe alors que le sens centrifuge est le sens opposé, X'.

Le vitrage 1 est destiné à fermer une baie qui est ici ménagée dans une carrosserie du véhicule ; un bord de cette baie - en l'occurrence un bord transversal avant pour les figures 1 et 2 et un bord transversal central pour les figures 3 à 7 est illustré par une feuillure 9.

La vitre 2 du vitrage 1 peut éventuellement être une vitre monolithique constituée d'une seule feuille de verre.

La vitre 2 du vitrage 1 est de préférence une vitre feuilletée qui comporte, de l'extérieur vers l'intérieur, au moins : une feuille de verre extérieure 3, une feuille intercalaire de matière plastique 4 et une feuille de verre intérieure 5 ; toutefois, il est possible qu'au moins une autre feuille soit intercalée entre la feuille de verre extérieure 3 et la feuille intercalaire de matière plastique 4 ou entre la feuille intercalaire de matière plastique 4 et la feuille de verre intérieure 5.

Dans les figures, les feuilles de verre sont illustrées chacune avec un chant arrondi ; toutefois, ces chants peuvent être droits, avec les arêtes entre les chants et les faces qui sont alors à angle droit.

La feuille de verre extérieure 3 présente une face extérieure 30 qui est orientée vers l'extérieur E et correspondant ainsi à la face extérieure 20 de la vitre 2, une face intercalaire 32 qui est orientée vers la feuille intercalaire de matière plastique 4, et un chant 31 situé entre ces deux faces.

La feuille de verre intérieure 5 présente une face intercalaire 50 qui est orientée vers la feuille intercalaire de matière plastique 4, une face intérieure 52 qui est orientée vers l'intérieur I et correspondant ainsi à la face intérieure 22 de la vitre 2, et un chant 51 situé entre ces deux faces.

La feuille intercalaire de matière plastique 4 présente une face intercalaire extérieure 40 qui est orientée vers la face intercalaire 32 et qui est ici au contact de cette face intercalaire 32, une face intercalaire intérieure 42 qui est orientée vers la face intercalaire 50 et qui est ici au contact de cette face intercalaire 50, ainsi qu'un chant 41 qui est situé entre ces deux faces intercalaires 40, 42.

La vitre 2 présente ainsi une face extérieure réalisée par la face extérieure 30 de la feuille de verre extérieure 3, une face intérieure réalisée par la face intérieure 52 de la feuille de verre intérieure 5 et un chant situé entre ces deux faces, correspondant au chant 31 de la feuille de verre extérieure 3 et au chant 51 de la feuille de verre intérieure 5, ces deux chants (d'une part 31, 51 et d'autre part 31', 51') étant ici dans la continuité l'un de l'autre tout en étant séparés par un espace correspondant à l'épaisseur de la feuille de matière plastique 4.

Le vitrage 1 est destiné à être collé sur la feuillure 9 à l'aide d'un cordon de colle 10 illustré d'une manière schématique, qui est situé entre la face intérieure 52 de la feuille de verre intérieure et une partie adjacente de la feuillure 9.

Le vitrage 1 comporte, outre la vitre 2, le long d'au moins une partie d'au moins un bord de la vitre 2 un cordon profilé 6 comportant une rainure 60 pour le clipage d'une pièce de couverture 7 sur ledit cordon profilé 6, ladite pièce de couverture 7 comportant, vue en coupe transversale, un harpon 70 pénétrant dans ladite rainure 60 lors du clipage.

La rainure 60 présente une embouchure et un fond : lors du clipage de la pièce de couverture 7, le harpon 70 pénètre dans la rainure 60 par l'embouchure et en direction du fond ; généralement, dans la position clippée, le harpon 70 ne touche pas le fond de la rainure.

L'embouchure de la rainure, par laquelle est introduit le harpon 70, est réalisée par deux avaloirs : un avaloir centripète 67, situé à droite du harpon 70 sur les figures et un avaloir centrifuge 67', situé à gauche du harpon 70 sur les figures. Ces deux avaloirs ont pour but de guider le harpon 70 avec précision vers le fond de la rainure 60 lors du clipage du harpon 70.

La pièce de couverture 7 est destinée à être positionnée plus à l'extérieur que le cordon profilé 6 et plus précisément plus à l'extérieur que la rainure 60.

Pour son attachement à la vitre 2, le cordon profilé 6 comporte, vu en coupe transversale :
- une aile intérieure 65 qui est située sous un bord de la face intérieure 22 de la vitre 2, et plus précisément ici sous un bord de la face intérieure 52 de la feuille de verre intérieure 5, comme visible sur les figures 1, 3 et 5, et/ou
- lorsque la vitre 2 est une vitre feuilletée, une aile intercalaire 64 qui est située entre la face intercalaire 32 de la feuille de verre extérieure 3 et la face intercalaire 50 de ladite feuille de verre intérieure 5, comme visible sur les figures 2 et 4.

Ces deux modes d'attache sont présentés ci-après.

### Cordon profilé à aile intérieure

Le cordon profilé 6 comporte, vu en coupe transversale, une aile intérieure 65 située en dessous (directement sous, ou indirectement sous et avec interposition/insertion d'une couche de colle ou d'un ruban adhésif) de la face intérieure 22 de la vitre 2 ; l'aile intérieure 65 est ainsi plus à l'intérieur que la face intérieure 22.

Une bande d'adhésion 8 formée par une couche de colle ou un ruban adhésif double face est situé entre une partie centripète de l'aile intérieure 65 et la face intérieure 22.

Cette bande d'adhésion permet de fixer cette aile intérieure 65 à la face intérieure 22 sus-jacente.

### Cordon profilé à aile intercalaire

L'aile intercalaire 64 est, de préférence, au contact d'une part de la face intercalaire 32 de ladite feuille de verre extérieure 3 et d'autre part de la face intercalaire 50 de la feuille de verre intérieure 5 et s'étend entre ces deux faces.

Le long du bord de la vitre comportant le cordon profilé 6 avec aile intercalaire le chant 41 de la feuille intercalaire de matière plastique 4 est donc en retrait centripète par rapport aux chants 31, 51 respectivement de la feuille de verre extérieure et de la feuille de verre intérieure pour permettre la présence de l'aile intercalaire.

En figures 2 et 4, l'aile intercalaire 64 est une aile simple, réalisée dans le même matériau et venue de matière avec la rainure 60, sans renfort.

Comme visible en figures 2 et 4, la totalité d'une face extérieure de l'aile intercalaire 64 est au contact de la face intercalaire 32 de ladite feuille de verre extérieure 3 et la totalité d'une face intérieure de l'aile intercalaire 64 est au contact de la face intercalaire 50 de la feuille de verre intérieure 5.

L'aile intercalaire 64 occupe ainsi l'espace situé en partant de l'aplomb sous le chant 31 de la feuille de verre extérieure et au-dessus du chant 52 de la feuille de verre intérieure et en direction de la feuille intercalaire de matière plastique 4 ; l'aile intercalaire présente ainsi une épaisseur identique à l'épaisseur de la feuille intercalaire de matière plastique 4 (en l'occurrence ici une épaisseur de 0,76 mm). Toutefois, elle n'entre pas en contact avec la feuille intercalaire de matière plastique 4 afin de ne pas perturber la cohésion réalisée par cette feuille intercalaire de matière plastique 4 avec les deux feuilles de verre, c'est-à-dire afin de ne pas perturber le feuilletage.

L'aile intercalaire 64 présente une largeur l₆₄, illustrée en figure 2, comprise entre 2,0 et 6,0 mm, voire comprise entre 3,0 et 5,0 mm. Cette largeur est suffisante pour permettre un bon maintien de l'aile intercalaire entre la feuille de verre extérieure et la feuille de verre intérieure sans risquer de perturber la cohésion de la feuille intercalaire de matière plastique 4 avec les deux feuilles de verre.

En figures 2 et 4, l'aile intercalaire 64 n'entre pas en contact avec la feuille intercalaire de matière plastique 4. Elle est maintenue entre la face intercalaire 32 et la face intercalaire 50 en étant comprimée (maintien mécanique) entre ces deux faces, comme illustré ici ; elle pourrait être collée (maintien chimique) à ces deux faces. Bien que cela ne soit pas illustré, il est possible par ailleurs que l'aile intercalaire 64 soit noyée dans la feuille intercalaire de matière plastique 4, avec de la matière de cette feuille intercalaire de matière plastique 4 d'une part entre l'aile intercalaire 64 et la face intercalaire 32 et/ou d'autre part entre l'aile intercalaire 64 et la face intercalaire 50.

Il est possible de réaliser une aile intercalaire avec une épaisseur inférieure à l'épaisseur entre la feuille de verre extérieure et ladite feuille de verre intérieure de la vitre.

La vitre 2 repose sur la feuillure 9 grâce à une butée 11 (ou plusieurs butées réparties le long du bord) interposée(s) entre la face intérieure 22 et la face de la feuillure orientée vers l'extérieur. Cette(ces) butée(s) peut (peuvent) permettre d'empêcher le contact entre la face intérieure 22 et la feuillure afin de permettre de préserver la vitre 2 et présenter par exemple une face extérieure souple 12 ; elle(s) peut (peuvent) permettre par ailleurs de contrôler l'épaisseur du cordon de colle 10.

Lorsque le cordon profilé comporte à la fois une aile intercalaire et une aile intérieure, pour pouvoir maintenir l'aile intérieure 65 éloignée de la face intérieure 52 lors de l'introduction l'aile intercalaire 64 dans l'espace entre les deux feuilles de verre, l'aile intérieure 65 comporte une portion charnière (non illustrée) en une matière polymérique souple.

Cette portion de charnière permet de soulever l'aile intérieure 65 pour positionner la bande d'adhésion 8 (cas d'une couche de colle) ou activer la bande d'adhésion 8 (cas d'un ruban adhésif double face avec un film de protection provisoire qui peut être pelé) et permettre de fixer l'aile intérieure 65 à la face intérieure 52 sus-jacente.

Sur les figures la rainure 60 est latérale : la rainure 60 du cordon profilé s'étend le long d'une partie du chant de la vitre 2, à côté du chant de la vitre 2 et l'embouchure de la rainure est orientée vers l'extérieure.

La rainure 60 est latérale car elle ne dépasse pas d'un plan artificiel considéré qui serait dans la continuité de la face extérieure 20 de la vitre 2.

La face extérieure 20 de la vitre 2 est ainsi libre par rapport au cordon profilé : le cordon profilé ne comporte pas d'aile extérieure.

Dans les variantes illustrées aux figures 1 à 7, la rainure 60 est située sous le chant 31 de ladite feuille de verre extérieure 3 du point de vue de l'orientation intérieur/extérieur et en vis-à-vis du chant 51 de ladite feuille de verre intérieure 5.

Dans les variantes illustrées aux figures 1 à 7, la rainure 60 est située contre le chant 51 de ladite feuille de verre intérieure 5.

Les deux avaloirs sont situés plus à l'intérieur que la face extérieure 30 de la feuille de verre extérieure 3 ; ils sont situés en dessous de cette face extérieure 30 lorsque le prolongement de cette face au-delà du chant 31 est considéré ; ainsi, de l'espace est disponible au-dessus de la rainure pour la base 72 et le revêtement extérieur 73 de la pièce de couverture.

Le fond de la rainure 60 est situé plus à l'intérieur que la face intérieure 52 de la feuille de verre intérieure 5 ; cela ne gêne pas le positionnement du vitrage dans la baie de la carrosserie car il y a de la place entre la face intérieure 52 et la feuillure 9 en raison de la présence du cordon de colle 10.

Les deux avaloirs de l'embouchure de la rainure sont chacun en forme de marteau avec les têtes situées en face l'une de l'autre du point de vue de l'orientation intérieure/extérieure.

De préférence, comme visible sur les figures 1 à 7, le fond de la rainure 60 forme un U symétrique ; la rainure présente ainsi un plan de symétrie P, afin de permettre une répartition uniforme des contraintes.

Quel que soit le mode de réalisation, la matière constitutive de la rainure 60 peut être renforcée par la présence, à l'intérieur, d'un insert 69, comme par exemple un insert métallique, qui permet d'augmenter la rigidité de la rainure. Cet insert peut être par exemple un profilé en aluminium d'une épaisseur de 0,4 mm.

Cet insert peut s'étendre à l'intérieur d'une aile, c'est-à-dire à l'intérieure de l'aile intercalaire 64 ou à l'intérieur de l'aile intérieure 65 comme visible sur les figures 1 et 3.

Sur les figures, la rainure 60 présente une hauteur d'environ 7,8 mm et une largeur d'environ 5,5 mm ; l'aile intercalaire 64 présente une largeur l₆₄ d'environ 3,0 mm, l'aile intérieure 65 présente une largeur d'environ 12,0 mm et la bande d'adhésion 8 présente une largeur d'environ 6 mm.

La pièce de couverture 7 est destinée à couvrir la rainure 60 lorsque le vitrage 1 est vu de l'extérieur E et à couvrir seulement cette rainure 60. Il s'agit ici, dans le cadre de l'application à un bord d'un vitrage de toit de véhicule, d'une pièce destinée à limiter la pénétration de l'eau et à l'enjoliver sur le côté du vitrage qui est en est pourvu. Il peut s'agir d'un enjoliveur.

La pièce de couverture 7 comporte, outre le harpon 70 :
- d'une part, plus à l'extérieur que le harpon 70, une base 72 et
- d'autre part, plus à l'extérieur que la base 72, un revêtement extérieur 73.

La base 72 est située en vis-à-vis et à distance d'au moins une partie du chant 21 de la vitre 2, c'est-à-dire que la base 72 n'est pas en contact avec le chant 21 de la vitre 2 à laquelle le cordon profilé 6 est fixé.

La base 72 s'étend au-dessus de la rainure 60, c'est-à-dire plus à l'extérieur que la rainure 60 ; elle couvre la rainure 60 dans le sens où elle présente une largeur l₇₂ qui est supérieur au trou de la rainure par lequel le harpon passe lors du clipage et cette largeur est sensiblement la largeur hors-tout de la rainure.

La base 72 présente une largeur l₇₂ comprise entre 2,0 et 20,0 mm, voire comprise entre 32,0 et 15,0 mm, voire comprise entre 4,0 et 10,0 mm et ici précisément de 5,5 mm, c'est-à-dire égale à la largeur de la rainure 60.

Lorsque le harpon est clippé dans la rainure, la base 72 n'est pas située exactement au-dessus de la rainure 60, mais est légèrement décalée, d'environ + 1,0 mm, en sens centrifuge.

La base 72 est de préférence venue de matière avec le harpon 70 ; c'est pour cela qu'ils sont illustrés avec les mêmes hachures sur les figures. Ils sont de préférence dans un matériau relativement rigide, comme par exemple un polymère thermoplastique, du type polypropylène.

Comme visible sur les figures, la base 72 est de préférence à distance de la rainure 60, c'est-à-dire qu'elle n'est pas en contact avec cette rainure. La base 72 est au-dessus de l'avaloir centripète 67 et de l'avaloir centrifuge 67', à une distance de l'ordre de 0,3 à 2,0 mm de ces deux avaloirs, par exemple de 0,5 mm ; Ainsi, même si la base se déforme à l'usage, par exemple lorsque le véhicule roule, elle ne peut pas faire sortir le harpon de la rainure.

Le revêtement extérieur 73 est souple. Il est situé en vis-à-vis et au contact d'au moins une partie du chant 21 de la vitre 2 à laquelle le cordon profilé 6 est fixé.

Il présente une dureté Shore A comprise entre 45 et 95, voire entre 55 et 85 ; C'est cette faible dureté qui lui confère sa souplesse. Il peut être par exemple en élastomère thermoplastique (TPE), du type TPE-U à base polyuréthane ou du type TPE-S à base de styrène.

Le contact du revêtement extérieur 73 avec le chant 21 est un contact simple, sans adhésion, afin de permettre de déclipper la pièce de couverture au besoin.

Comme visible sur les figures, la face extérieure 20 de la vitre 2 est libre par rapport à la pièce de couverture 7 ; le revêtement extérieur 73 présente une face extérieure qui est située dans la continuité de la face extérieure 20 de ladite vitre 2. La pièce de couverture 7 est ainsi affleurante avec la continuité de la face extérieure 20 de la vitre 2 ; elle est « flush ». La pièce de couverture 7 ne dépasse pas plus à l'extérieur que la face extérieure 20 de la vitre 2.

La base 72 réalise ainsi un support rigide pour le revêtement extérieur 73. Le revêtement extérieur 73 recouvre complètement le côté de la base 72 qui est tourné vers l'extérieur et s'étend au-delà, aussi bien dans le sens centrifuge que dans le sens centripète.

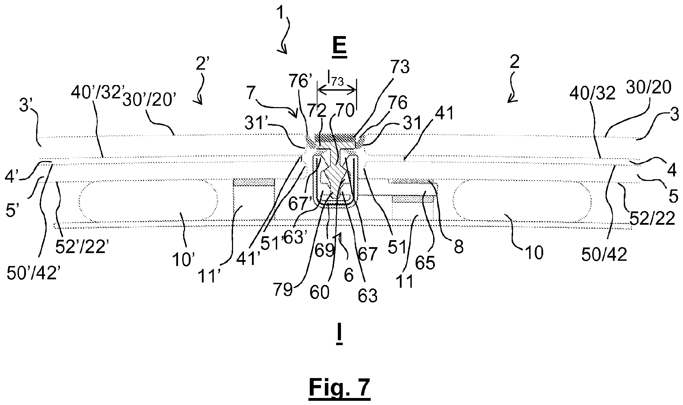

Le revêtement extérieur 73 présente ainsi une largeur l₇₃ au moins égale, voire supérieure à la largeur l₇₂ de la base 72 :
- en figures 1 à 6, le revêtement extérieur 73 présente une largeur l₇₃ comprise entre 1,05 et 1,55 fois la largeur l₇₂ de la base 72, et plus précisément ici de 1,45 fois, c'est-à-dire de 8,0 mm ;
- alors qu'en figure 7, le revêtement extérieur 73 présente une largeur l₇₃ égale à la largeur l₇₂ de la base 72.

Comme indiqué précédemment, la pièce de couverture 7 peut être utilisée lorsqu'une seule vitre 2 est fixée à une feuillure 9 de carrosserie, comme illustré aux figures 1 et 2, ou lorsqu'une vitre 2 et une vitre adjacente 2' sont fixées côté à côté à une même feuillure 9 de carrosserie, comme illustré aux figures 3 à 7.

Dans ce second mode d'utilisation, celui des figures 3 à 7, le vitrage 1 comporte ainsi, outre la vitre 2, une vitre adjacente 2' qui est décrite ici de la même manière que la vitre 2, en utilisant les mêmes numéros de référence pour désigner les mêmes éléments, mais en ajoutant un « ' ».

Il est à noter que le cordon profilé 6 n'est fixé qu'à la vitre 2 ; il n'est pas fixé à la vitre adjacente 2'.

Cette vitre adjacente 2' peut être une vitre adjacente monolithique mais est, de préférence, une vitre adjacente 2' feuilletée comprenant une feuille de verre extérieure 3' ainsi qu'une feuille de verre intérieure 5' et une feuille intercalaire de matière plastique 4' située entre lesdites deux feuilles de verre 3, et 5', ladite vitre adjacente 2' présentant une face extérieure 20' orientée vers l'extérieur E, une face intérieure 22' orientée vers l'intérieur I et un chant 21' situé entre ces deux faces.

La vitre adjacente 2' présente, de préférence, une épaisseur identique à la vitre 2.

La face extérieure 20' de la vitre adjacente 2' est, de préférence, située sensiblement dans la continuité ou dans le prolongement dans la face extérieure 20 de la vitre adjacente 2.

La face intérieure 22' de la vitre adjacente 2' est, de préférence aussi, située sensiblement dans le prolongement de la face intérieure 22 de la vitre adjacente 2 mais si ce n'est pas le cas, la feuillure 9 ou une cale supplémentaire peut compenser une éventuelle différence de prolongement.

Sur les figures 3 à 7, la feuillure 9 constitue une traverse de la carrosserie, s'étendant d'un bord gauche jusqu'à un bord droit de la carrosserie du véhicule. Elle constitue un support rigide pour les bords de la vitre 2 et de la vitre adjacente 2'. Elle présente une largeur de l'ordre de 5,0 à 12,0 cm.

La base 72 est située en vis-à-vis et à distance d'au moins une partie du chant 21' de la vitre adjacente 2', c'est-à-dire que la base 72 n'est pas en contact avec le chant 21' de la vitre adjacente 2'.

Sur le figures 3 à 6 le revêtement extérieur 73 est situé en vis-à-vis et au contact d'au moins une partie dudit chant 21' de la vitre adjacente 2'. Le contact du revêtement extérieur 73 avec le chant 21' est un contact simple, sans adhésion, afin de permettre de déclipper la pièce de couverture au besoin.

Lorsque la vitre adjacente 2' est considérée, il est possible de constater que son chant 21' est nu, sans cordon de matière plastique, et de préférence en outre sa face extérieure 20' est aussi nue, sans cordon de matière plastique.

La vitre adjacente 2' est collée à la feuillure 9 qui s'étend sous un bord grâce à un cordon de colle 10' : il s'agit de la même feuillure que celle à laquelle la vitre 2 est collée, respectivement grâce au cordon de colle 10.

Eventuellement, il est possible de prévoir une butée 11' (ou plusieurs butées réparties le long du bord) interposée(s) entre la face intérieure 22' et la face de la feuillure orientée vers l'extérieur. Cette(ces) butée(s) peut (peuvent) permettre d'empêcher le contact entre la face intérieure 22' et la feuillure afin de permettre de préserver la vitre 2' et présenter par exemple une face extérieure souple 12' ; elle(s) peut (peuvent) permettre par ailleurs de contrôler l'épaisseur du cordon de colle 10'.

De préférence, le cordon profilé 6 est séparé du chant 21' de la vitre adjacente 2', sans contact direct avec ce chant 21' ; il est même de préférence encore complètement séparé de la vitre adjacente 2', sans aucun contact direct avec la vitre adjacente 2'.

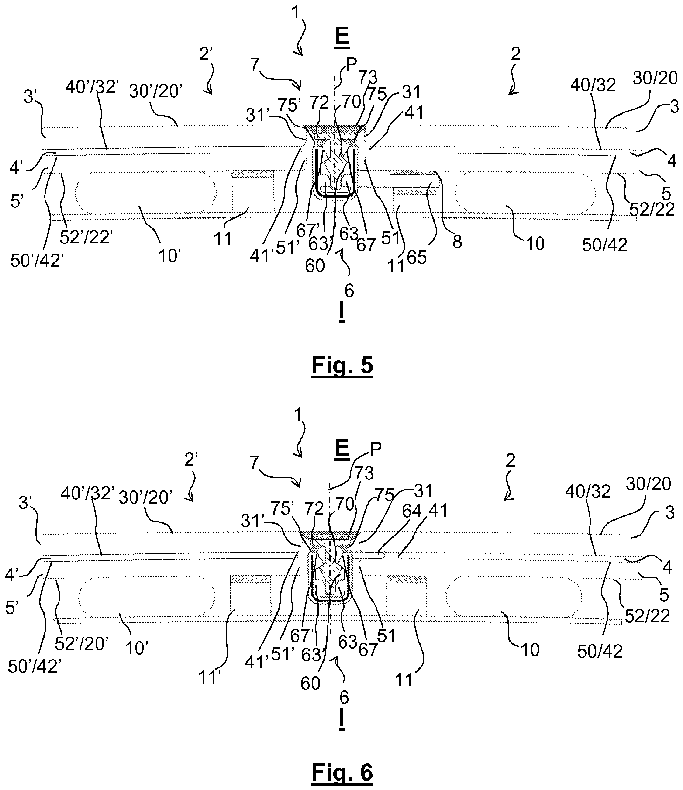

Dans les variantes illustrées aux figures 5 à 7 la base 72 comporte, vue en coupe transversale, au moins une, et de préférence deux, lèvre(s) intérieure(s) 75', 75 :
- la lèvre intérieure 75 est orientée vers l'avaloir centripète 67 de la rainure 60,
- voire en outre la lèvre intérieure 75' est orientée vers l'avaloir centrifuge 67' de la rainure 60.

La (ou chaque) lèvre intérieure 75, 75' est de préférence en un matériau différent de celui de ladite base 72 ; ce peut-être un matériau identique au matériau constitutif du revêtement extérieur 73 et en particulier un matériau présentant une dureté Shore A comprise entre 45 et 95, voire entre 55 et 85.

Dans les variantes illustrées aux figures 1 à 6 le revêtement extérieur 73 est au contact, sans adhésion, d'au moins une partie du chant 21 de la vitre 2 ; en outre, dans les variantes des figures 3 à 6, le revêtement extérieur 73 est au contact, sans adhésion, d'au moins une partie du chant 21' de la vitre adjacente 2". Le revêtement extérieur 73 peut participer au positionnement et la mise en référence de la pièce de couverture 7.

Toutefois, dans la variante de la figure 7, le revêtement extérieur 73 n'est pas au contact du tout d'au moins une partie du chant 21 de la vitre 2 ; en outre, le revêtement extérieur 73 n'est pas au contact du tout d'au moins une partie du chant 21' de la vitre adjacente 2' ; ladite base 72 comporte, vue en coupe transversale, au moins une, et de préférence deux, lèvre(s) extérieure(s) 76, 76' :
- la lèvre extérieure 76 est orientée vers le chant 21 de la vitre 2 avec un contact, sans adhésion, avec cette vitre 2,
- voire en outre, la lèvre extérieure 76' est orientée vers le chant 21' de la vitre adjacente 2' avec un contact, sans adhésion, avec cette vitre adjacente 2' ou est orientée vers une partie en vis-à-vis de la feuillure (non illustré) avec un contact, sans adhésion, avec cette partie de feuillure.

La (ou chaque) lèvre extérieure 76, 76' est de préférence en un matériau différent de celui du harpon 70 ; ce peut-être un matériau identique au matériau constitutif du revêtement extérieur 73 ; c'est un matériau présentant une dureté Shore A comprise entre 45 et 90, voire entre 55 et 85.

La (ou chaque) lèvre extérieure 76, 76' peut participer au positionnement et la mise en référence de la pièce de couverture 7.

Dans les variantes illustrées, le harpon est double : il est constitué, vu en coupe transversale, de deux bossages orientés à l'opposé l'un de l'autre :
- ces deux bossage étant décalés du point de vue de l'orientation intérieure/extérieure pour les variantes des figures 1 à 4 : le bossage centrifuge, destiné à venir sous l'avaloir centrifuge 67' étant situé légèrement plus à l'extérieur que le bossage centripète destiné à venir sous l'avaloir centripète 67 ;
- ces deux bossage étant en vis-à-vis du point de vue de l'orientation centrifuge/centripète pour les variantes des figures 5 à 7, afin de permettre de réaliser un harpon présentant un plan de symétrie P.

Le clipage consiste ainsi en la pénétration du harpon 70 à l'intérieur de la rainure 60 et plus précisément des deux bossages du harpon à l'intérieur de la rainure 60 et sous les deux avaloirs.

Pour une retenue correcte, la largeur de l'embouchure, au plus court entre les deux avaloirs, est inférieure à la largeur des deux bossages du harpon, au plus large.

Les figures 5 à 7 illustrent une variante indépendante des précédentes dans laquelle :
- d'une part, la rainure 60 comporte, vue en coupe transversale, deux bossages 63', 63 longitudinaux située en vis-à-vis l'un de l'autre et sous respectivement l'avaloir centrifuge 67' de la rainure 60 et sous l'avaloir centripète 67 de ladite rainure 60 afin de réaliser un guide pour l'extrémité intérieure du harpon 70 qui se trouve entre ces deux bossage 63, 63' lorsque le harpon est clipé, et
- d'autre part le harpon 70 comporte, vu en coupe transversale, dans sa partie à l'intérieur de la rainure 60 juste au-dessous et au contact des avaloirs centrifuge 67' et centripète 67, une dent centrifuge et une dent centripète.

Cela permet de diminuer l'effort de clipage lors de l'introduction du harpon 70 dans la rainure 60 tout en augmentant l'effort nécessaire au déclipage ; cela peut permettre en outre de fiabiliser le positionnement de la pièce de couverture par rapport au cordon profilé et ainsi par rapport à la vitre qui porte ce cordon profilé.

Le harpon 70 comporte en outre, vu en coupe transversale, une extrémité intérieure plate 79, qui vient se loger entre lesdits bossages longitudinaux 63, 63' de ladite rainure pour améliorer encore la fiabilité du positionnement.

Ladite pièce de couverture 7 comporte, de préférence, vue en coupe transversale, un plan de symétrie P afin que pièce de couverture n'ait pas sens de pose et pour éviter les erreurs de pose.

Ladite rainure 60 comporte aussi, de préférence un plan de symétrie qui est confondu avec celui de la pièce de couverture afin de faciliter la pose.

Dans toutes les variantes, la pièce de couverture 7 peut être clippée librement dans la rainure 60. Elle peut être également dé-clippée librement de cette rainure 60 sous réserve de vaincre les forces de retenue exercées par la rainure sur le harpon, ainsi que le frottement :
- du revêtement extérieur 73 contre le chant 21, voire contre le chant 21' si la vitre adjacente 2' est présente ;
- ou de la (ou des) lèvre(s) extérieure(s) 76.

La pièce de couverture 7 n'est pas collée et n'adhère pas au cordon profilé 6, ni à la vitre 2, ni à la vitre adjacente 2' si cette dernière est présente.

Les figures montrent que le harpon 70 et la base 72 sont venus de matière ; ce mode de réalisation présente une facilité de fabrication car il est alors relativement simple de faire adhérer le revêtement extérieur 73 souple sur la base.

Toutefois, il est possible que le harpon 70 et la base 72 ne soient pas fabriqués dans le même matériau ; il est possible en particulier que la base et le revêtement extérieur soient fabriqués dans le même matériau, souple.

Bien que cela ne soit pas illustré, il est possible de prévoir que la vitre 2, 2' comporte une bande de masquage située plus à l'extérieur que l'aile intercalaire et/ou plus à l'extérieur que l'aile intérieure et cela pour masquer à la fois l'aile intercalaire et/ou l'aile intérieure ainsi que le cordon de colle 10, permettant la fixation de la vitre 2 à la carrosserie.

La vitre adjacente 2' peut aussi comporter une bande de masquage (non illustrée) pour masquer le cordon de colle 10' permettant la fixation de la vitre adjacente 2' à la carrosserie.

La présente solution est particulière indiquée lorsque le vitrage 1 présente une largeur entre ledit chant 21 et une feuillure 9 adjacente ou entre lesdits chants 21, 21' qui est relativement faible, c'est-à-dire comprise entre 2,0 et 20,0 mm, voire comprise entre 3,0 et 15,0 mm, voire comprise entre 4,0 et 10,0 mm.

La présente invention est susceptible de s'appliquer à n'importe quel vitrage et en particulier à n'importe quel vitrage de véhicule. Elle peut s'appliquer à n'importe quel bord de ce vitrage : gauche, droit, haut ou bas et en particulier à plusieurs de ces bords à la fois, voire à tous ces bords à la fois.

Le cordon profilé 6 peut être situé le long de deux bords latéraux de la vitre 2 et/ou le long de trois bords latéraux de la vitre 2de la vitre et/ou le long de tous les bords de la vitre 2. Il peut ne pas être situé le long d'un bord bas, en particulier lorsque le vitrage est un pare-brise de véhicule ; notamment lorsque le vitrage comporte un autre type de cordon profilé le long du bord bas.

## Revendications

1. Vitrage (1), et notamment vitrage de véhicule, comprenant une vitre (2), notamment une vitre feuilletée comprenant une feuille de verre extérieure (3), une feuille de verre intérieure (5) et une feuille intercalaire de matière plastique (4) située entre lesdites deux feuilles de verre, ladite vitre (2) présentant une face extérieure (20), un chant (21) et une face intérieure (22),
ladite vitre (2) comportant le long d'au moins une partie d'au moins un bord longitudinal un cordon profilé (6),
ledit vitrage (1) comportant en outre une vitre adjacente (2'), notamment une vitre adjacente feuilletée comprenant une feuille de verre extérieure (3') ainsi qu'une feuille de verre intérieure (5') et une feuille intercalaire de matière plastique (4') située entre lesdites deux feuilles de verre, ladite vitre adjacente présentant une face extérieure (20'), un chant (21') et une face intérieure (22'),
**caractérisé en ce que** ledit cordon profilé (6) comporte une rainure (60) pour le clipage d'une pièce de couverture (7) sur ledit cordon profilé (6), ladite pièce de couverture (7) comportant, vue en coupe transversale, un harpon (70) pénétrant dans ladite rainure (60) lors du clipage,
lorsque ledit harpon (70) est situé dans ladite rainure (60), ladite pièce de couverture (7) comportant en outre d'une part, plus à l'extérieur que ledit harpon (70) et en dehors de ladite rainure (60), une base (72) située en vis-à-vis et à distance à la fois d'au moins une partie dudit chant (21) de ladite vitre (2) et d'au moins une partie dudit chant (21') de ladite vitre adjacente (2') et d'autre part, plus à l'extérieur que ladite base (72), un revêtement extérieur (73), souple, présentant une dureté Shore A comprise entre 45 et 90, voire entre 55 et 85 et situé en vis-à-vis à la fois d'au moins une partie dudit chant (21) de ladite vitre (2) et d'au moins une partie dudit chant (21') de ladite vitre adjacente (2').

2. Vitrage (1) suivant la revendication 1, **caractérisé en ce que** ledit revêtement extérieur (73) présente une face extérieure qui est située dans la continuité de ladite face extérieure (20) de ladite vitre (2).

3. Vitrage (1) suivant la revendication 1 ou la revendication 2, **caractérisé en ce que** ladite base (72) présente une largeur (l₇₂) comprise entre 2,0 et 20,0 mm, voire comprise entre 3,0 et 15,0 mm, voire comprise entre 4,0 et 10,0 mm.

4. Vitrage (1) suivant l'une quelconque des revendications 1 à 3, **caractérisé en ce que** ledit revêtement extérieur (73) présente une largeur (l₇₃) comprise entre 1,05 et 1,5 fois la largeur (l₇₂) de ladite base (72).

5. Vitrage (1) suivant l'une quelconque des revendications 1 à 4, **caractérisé en ce que** ledit cordon profilé (6) s'étend le long d'au moins deux bords de ladite vitre (2), afin de permettre de réaliser une double liaison affleurante entre ladite vitre (2) et une feuillure (9) de carrosserie adjacente.

6. Vitrage (1) suivant l'une quelconque des revendications 1 à 5, **caractérisé en ce que** le chant (21') de ladite vitre adjacente (2') est nu, sans cordon de matière plastique, et de préférence en outre la face extérieure (20') de ladite vitre adjacente (2') est aussi nue, sans cordon de matière plastique au contact de la face extérieure (20') de ladite vitre adjacente (2').

7. Vitrage (1) suivant l'une quelconque des revendications 1 à 6, **caractérisé en ce que** ledit cordon profilé (6) est séparé, sans contact, du chant (21') de ladite vitre adjacente (2').

8. Vitrage (1) suivant l'une quelconque des revendications 1 à 7, **caractérisé en ce que** ledit cordon profilé (6) est situé le long d'un bord avant et/ou arrière de ladite vitre (2) positionnée à plat.

9. Vitrage (1) suivant l'une quelconque des revendications 1 à 7, **caractérisé en ce que** ledit cordon profilé (6) est périphérique, situé tout le long d'un pourtour de ladite vitre (2).

10. Vitrage (1) suivant l'une quelconque des revendications 1 à 9, **caractérisé en ce que** ledit cordon profilé (6) comporte, vu en coupe transversale, une aile intercalaire (64) située entre une face intercalaire (32) de ladite feuille de verre extérieure (3) et une face intercalaire (50) de ladite feuille de verre intérieure (5).

11. Vitrage (1) suivant la revendication 10, **caractérisé en ce que** ladite aile intercalaire (64) présente une épaisseur :
- égale à l'épaisseur entre ladite feuille de verre extérieure (3) et ladite feuille de verre intérieure (5) et en particulier égale à l'épaisseur de ladite feuille intercalaire de matière plastique (4) et notamment égale à 0,76 mm, ou
- inférieure à l'épaisseur entre ladite feuille de verre extérieure (3) et ladite feuille de verre intérieure (5).

12. Vitrage (1) suivant l'une quelconque des revendications 1 à 11, **caractérisé en ce que** ledit cordon profilé (6) comporte, vu en coupe transversale, une aile intérieure (65) située en dessous de ladite face intérieure (22) de ladite vitre (2).

13. Vitrage (1) suivant l'une quelconque des revendications 1 à 12, **caractérisé en ce que** ladite base (72) comporte, vue en coupe transversale, au moins une, et de préférence deux, lèvre (s) intérieure (s) (75', 75) orientée(s) respectivement vers un avaloir centrifuge (67') de ladite rainure (60) et/ou vers un avaloir centripète (67) de ladite rainure (60), ladite ou chaque lèvre intérieure (75, 75') étant de préférence en un matériau différent de celui de ladite base (72).

14. Vitrage (1) suivant l'une quelconque des revendications 1 à 13, **caractérisé en ce que** ledit revêtement extérieur (73) est au contact d'au moins une partie dudit chant (21) de la vitre (2), voire en outre au contact d'au moins une partie dudit chant (21') de la vitre adjacente (2').

15. Vitrage (1) suivant l'une quelconque des revendications 1 à 13, **caractérisé en ce que** ladite base (72) comporte, vue en coupe transversale, au moins une, et de préférence deux, lèvre(s) extérieure(s) (76, 76') orientée(s) respectivement vers ledit chant (21) de la vitre (2) avec un contact et/ou vers ledit chant (21') de ladite vitre adjacente (2') avec un contact.

16. Vitrage (1) suivant l'une quelconque des revendications 1 à 15, **caractérisé en ce que** ladite rainure (60) comporte, vue en coupe transversale, deux bossages (63, 63') longitudinaux située en vis-à-vis l'un de l'autre et sous respectivement un avaloir centrifuge (67') de ladite rainure (60) et un avaloir centripète (67) de ladite rainure (60).

17. Vitrage (1) suivant l'une quelconque des revendications 1 à 16, **caractérisé en ce que** ladite base (72) est à distance au-dessus de ladite rainure (60).

18. Vitrage (1) suivant l'une quelconque des revendications 1 à 17, **caractérisé en ce que** ladite pièce de couverture (7) comporte, vue en coupe transversale, un plan de symétrie (P).

19. Vitrage (1) suivant l'une quelconque des revendications 1 à 17, **caractérisé en ce que** ladite pièce de couverture (7) présente, vue en coupe transversale, un revêtement extérieur (71) qui s'étend latéralement plus vers une feuillure (9) ou une vitre adjacente (2') que vers ladite vitre (2) lorsque ledit harpon (70) est pris pour référence.

## Patentansprüche

1. Verglasung (1), insbesondere Fahrzeugverglasung, umfassend eine Scheibe (2), insbesondere eine Verbundscheibe, umfassend eine äußere Glasscheibe (3), eine innere Glasscheibe (5) und eine zwischen den beiden Glasscheiben angeordnete Zwischenscheibe aus Kunststoffmaterial (4), wobei die Scheibe (2) eine Außenseite (20), einen Rand (21) und eine Innenseite (22) aufweist,
wobei die Scheibe (2) entlang mindestens eines Teils mindestens einer Längskante einen profilierten Wulst (6) umfasst,
wobei die Verglasung (1) ferner eine angrenzende Scheibe (2') umfasst, insbesondere eine angrenzende Verbundscheibe, die eine äußere Glasscheibe (3') sowie eine innere Glasscheibe (5') und eine zwischen den beiden Glasscheiben angeordnete Zwischenscheibe aus Kunststoffmaterial (4') umfasst, wobei die angrenzende Scheibe eine Außenseite (20'), einen Rand (21') und eine Innenseite (22') aufweist,
**dadurch gekennzeichnet, dass** der profilierte Wulst (6) eine Nut (60) zum Aufklemmen eines Abdeckteils (7) an dem profilierten Wulst (6) umfasst, wobei das Abdeckteil (7) im Querschnitt betrachtet eine Harpune (70) umfasst, die während des Aufklemmens in die Nut (60) eindringt,
wenn die Harpune (70) in der Nut (60) angeordnet ist, wobei das Abdeckteil (7) ferner einerseits weiter außen als die Harpune (70) und außerhalb der Nut (60) eine Basis (72), die gegenüber und beabstandet sowohl von mindestens einem Teil des Randes (21) der Scheibe (2) als auch von mindestens einem Teil des Randes (21') der angrenzenden Scheibe (2') angeordnet ist, und andererseits, weiter außen als die Basis (72), eine flexible äußere Beschichtung (73) umfasst, die eine Shore-A Härte zwischen 45 und 90 oder sogar zwischen 55 und 85 aufweist und sowohl gegenüber mindestens einem Teil des Randes (21) der Scheibe (2) als auch mindestens einem Teil des Randes (21') der angrenzenden Scheibe (2') angeordnet ist.

2. Verglasung (1) nach Anspruch 1, **dadurch gekennzeichnet, dass** die äußere Beschichtung (73) eine Außenseite aufweist, die in Fortsetzung der Außenseite (20) der Scheibe (2) angeordnet ist.

3. Verglasung (1) nach Anspruch 1 oder Anspruch 2, **dadurch gekennzeichnet, dass** die Basis (72) eine Breite (l₇₂) zwischen 2,0 und 20,0 mm oder sogar zwischen 3,0 und 15,0 mm oder sogar zwischen 4,0 und 10,0 mm aufweist.

4. Verglasung (1) nach einem der Ansprüche 1 bis 3, **dadurch gekennzeichnet, dass** die äußere Beschichtung (73) eine Breite (l₇₃) zwischen dem 1,05 und 1,5-fachen der Breite (l₇₂) der Basis (72) aufweist.

5. Verglasung (1) nach einem der Ansprüche 1 bis 4, **dadurch gekennzeichnet, dass sich** der profilierte Wulst (6) entlang mindestens zweier Kanten der Scheibe (2) erstreckt, um das Erzeugen einer bündigen Doppelverbindung zwischen der Scheibe (2) und einem Falz (9) einer angrenzenden Karosserie zu ermöglichen.

6. Verglasung (1) nach einem der Ansprüche 1 bis 5, **dadurch gekennzeichnet, dass** der Rand (21') der angrenzenden Scheibe (2') blank ist, ohne Wulst aus Kunststoffmaterial, und vorzugsweise ferner die Außenseite (20') der angrenzenden Scheibe (2') ebenfalls blank ist, ohne Wulst aus Kunststoffmaterial in Kontakt mit der Außenseite (20') der angrenzenden Scheibe (2').

7. Verglasung (1) nach einem der Ansprüche 1 bis 6, **dadurch gekennzeichnet, dass** der profilierte Wulst (6) von dem Rand (21') der angrenzenden Scheibe (2') kontaktlos getrennt ist.

8. Verglasung (1) nach einem der Ansprüche 1 bis 7, **dadurch gekennzeichnet, dass** der profilierte Wulst (6) entlang einer Vorder- und/oder Hinterkante der Scheibe (2) flachliegend angeordnet ist.

9. Verglasung (1) nach einem der Ansprüche 1 bis 7, **dadurch gekennzeichnet, dass** der profilierte Wulst (6) peripher ist, der entlang des gesamten Umfangs der Scheibe (2) angeordnet ist.

10. Verglasung (1) nach einem der Ansprüche 1 bis 9, **dadurch gekennzeichnet, dass** der profilierte Wulst (6) im Querschnitt betrachtet einen Zwischenschenkel (64) umfasst, der zwischen einer Zwischenseite (32) der äußeren Glasscheibe (3) und einer Zwischenseite (50) der inneren Glasscheibe (5) angeordnet ist.

11. Verglasung (1) nach Anspruch 10, **dadurch gekennzeichnet, dass** der Zwischenschenkel (64) eine Dicke aufweist, die:
- gleich der Dicke zwischen der äußeren Glasscheibe (3) und der inneren Glasscheibe (5) und insbesondere gleich der Dicke der Zwischenscheibe aus Kunststoffmaterial (4) und insbesondere gleich 0,76 mm ist, oder
- kleiner als die Dicke zwischen der äußeren Glasscheibe (3) und der inneren Glasscheibe (5) ist.

12. Verglasung (1) nach einem der Ansprüche 1 bis 11, **dadurch gekennzeichnet, dass** der profilierte Wulst (6) im Querschnitt betrachtet einen inneren Schenkel (65) umfasst, der unterhalb der Innenseite (22) der Scheibe (2) angeordnet ist.

13. Verglasung (1) nach einem der Ansprüche 1 bis 12, **dadurch gekennzeichnet, dass** die Basis (72) im Querschnitt betrachtet mindestens eine, und vorzugsweise zwei, innere Lippe(n) (75', 75) umfasst, die jeweils einem Zentrifugalauslauf (67') der Nut (60) und/oder einem Zentripetalauslauf (67) der Nut (60) zugewandt sind, wobei die oder jede innere Lippe (75, 75') vorzugsweise aus einem anderen Material als dem der Basis (72) besteht.

14. Verglasung (1) nach einem der Ansprüche 1 bis 13, **dadurch gekennzeichnet, dass** die äußere Beschichtung (73) mit mindestens einem Teil des Randes (21) der Scheibe (2) oder sogar ferner mit mindestens einem Teil des Randes (21') der angrenzenden Scheibe (2') in Kontakt steht.

15. Verglasung (1) nach einem der Ansprüche 1 bis 13, **dadurch gekennzeichnet, dass** die Basis (72) im Querschnitt betrachtet mindestens eine, vorzugsweise zwei äußere Lippe(n) (76, 76') umfasst, die jeweils dem Rand (21) der Scheibe (2) mit Kontakt und/oder dem Rand (21') der angrenzenden Scheibe (2') mit Kontakt zugewandt sind.

16. Verglasung (1) nach einem der Ansprüche 1 bis 15, **dadurch gekennzeichnet, dass** die Nut (60) im Querschnitt betrachtet zwei Längsvorsprünge (63, 63') umfasst, die einander gegenüberliegend und unter einem Zentrifugalauslauf (67') der Nut (60) bzw. einem Zentripetalauslauf (67) der Nut (60) angeordnet sind.

17. Verglasung (1) nach einem der Ansprüche 1 bis 16, **dadurch gekennzeichnet, dass** die Basis (72) beabstandet über der Nut (60) angeordnet ist.

18. Verglasung (1) nach einem der Ansprüche 1 bis 17, **dadurch gekennzeichnet, dass** das Abdeckteil (7) im Querschnitt betrachtet eine Symmetrieebene (P) umfasst.

19. Verglasung (1) nach einem der Ansprüche 1 bis 17, **dadurch gekennzeichnet, dass** das Abdeckteil (7) im Querschnitt betrachtet eine äußere Beschichtung (71) aufweist, die sich seitlich mehr in Richtung eines Falzes (9) oder einer angrenzenden Scheibe (2') als in Richtung der Scheibe (2) erstreckt, wenn die Harpune (70) als Referenz genommen wird.

## Claims

1. Glazing (1), and in particular vehicle glazing, comprising a window (2), in particular a laminated window comprising an exterior layer of glass (3), an interior layer of glass (5) and a plastic material interlayer (4) situated between said two layers of glass, said window (2) having an exterior face (20), an edge surface (21) and an interior face (22),
said window (2) including along at least one part of at least one longitudinal edge a profiled bead (6),
said glazing (1) further including an adjacent window (2'), in particular an adjacent laminated window comprising an exterior layer of glass (3') as well as an interior layer of glass (5') and a plastic material interlayer (4') situated between said two layers of glass, said adjacent window having an exterior face (20'), an edge surface (21') and an interior face (22'),
**characterized in that** said profiled bead (6) includes a groove (60) for clipping a cover piece (7) to said profiled bead (6), said cover piece (7) including, seen in cross section, a harpoon (70) penetrating into said groove (60) during clipping,
when said harpoon (70) is situated in said groove (60), said cover piece (7) further including on the one hand, farther toward the exterior than said harpoon (70) and outside of said groove (60), a base (72) situated facing and at a distance from both at least one part of said edge surface (21) of said window (2) and at least one part of said edge surface (21') of said adjacent window (2') and on the other hand, farther toward the exterior than said base (72), a flexible exterior covering (73) having a Shore A hardness between 45 and 90 inclusive, or even between 55 and 85 inclusive and situated facing both at least one part of said edge surface (21) of said window (2) and at least one part of said edge surface (21') of said adjacent window (2').

2. The glazing (1) as claimed in claim 1, **characterized in that** said exterior covering (73) has an exterior face that is situated in continuity with said exterior face (20) of said window (2).

3. The glazing (1) as claimed in claim 1 or claim 2, **characterized in that** said base (72) has a width (l₇₂) between 2.0 and 20.0 mm inclusive, or even between 3.0 and 15.0 mm inclusive, or even between 4.0 and 10.0 mm inclusive.

4. The glazing (1) as claimed in any one of claims 1 to 3, **characterized in that** said exterior covering (73) has a width (l₇₃) between 1.05 and 1.5 times inclusive the width (l₇₂) of said base (72) .

5. The glazing (1) as claimed in any one of claims 1 to 4, **characterized in that** said profiled bead (6) extends along at least two edges of said window (2) in order to enable production of a flush double connection between said window (2) and an adjacent body rabbet (9).

6. The glazing (1) as claimed in any one of claims 1 to 5, **characterized in that** the edge surface (21') of said adjacent window (2') is bare, with no plastic material bead, and moreover the exterior face (20') of said adjacent window (2') is also preferably bare, with no plastic material bead in contact with the exterior face (20') of said adjacent window (2').

7. The glazing (1) as claimed in any one of claims 1 to 6, **characterized in that** said profiled bead (6) is separated, without contact, from the edge surface (21') of said adjacent window (2').

8. The glazing (1) as claimed in any one of claims 1 to 7, **characterized in that** said profiled bead (6) is situated along a front and/or rear edge of said window (2) positioned flat.

9. The glazing (1) as claimed in any one of claims 1 to 7, **characterized in that** said profiled bead (6) is peripheral, situated all along a perimeter of said window (2) .

10. The glazing (1) as claimed in any one of claims 1 to 9, **characterized in that** said profiled bead (6) includes, seen in cross section, an interlayer wing (64) situated between an interlayer face (32) of said exterior layer of glass (3) and an interlayer face (50) of said interior layer of glass (5).

11. The glazing (1) as claimed in claim 10, **characterized in that** said interlayer wing (64) has a thickness:
- equal to the thickness between said exterior layer of glass (3) and said interior layer of glass (5) and in particular equal to the thickness of said plastic material interlayer (4) and in particular equal to 0.76 mm, or
- less than the thickness between said exterior layer of glass (3) and said interior layer of glass (5).

12. The glazing (1) as claimed in any one of claims 1 to 11, **characterized in that** said profiled bead (6) includes, seen in cross section, an interior wing (65) situated below said interior face (22) of said window (2).

13. The glazing (1) as claimed in any one of claims 1 to 12, **characterized in that** said base (72) includes, seen in cross section, at least one, and preferably two, interior lip(s) (75', 75) respectively oriented toward a centrifugal throat (67') of said groove (60) and/or toward a centripetal throat (67) of said groove (60), said or each interior lip (75, 75') preferably being made from a material different from that of said base (72).

14. The glazing (1) as claimed in any one of claims 1 to 13, **characterized in that** said exterior covering (73) is in contact with at least one part of said edge surface (21) of the window (2), or even moreover in contact with at least one part of said edge surface (21') of the adjacent window (2').

15. The glazing (1) as claimed in any one of claims 1 to 13, **characterized in that** said base (72) includes, seen in cross section, at least one, and preferably two, exterior lip(s) (76, 76') respectively oriented toward said edge surface (21) of the window (2) with contact and/or toward said edge surface (21') of said adjacent window (2') with contact.

16. The glazing (1) as claimed in any one of claims 1 to 15, **characterized in that** said groove (60) includes, seen in cross section, two longitudinal bosses (63, 63') situated facing one another and respectively below a centrifugal throat (67') of said groove (60) and a centripetal throat (67) of said groove (60).

17. The glazing (1) as claimed in any one of claims 1 to 16, **characterized in that** said base (72) is at a distance above said groove (60).

18. The glazing (1) as claimed in any one of claims 1 to 17, **characterized in that** said cover piece (7) has, seen in cross section, a plane of symmetry (P).

19. The glazing (1) as claimed in any one of claims 1 to 17, **characterized in that** said cover piece (7) has, seen in cross section, an exterior covering (71) that extends laterally farther toward a rabbet (9) or an adjacent window (2') than toward said window (2) when said harpoon (70) is taken as the reference.
